# EUROPÄISCHE PATENTSCHRIFT

(11) **EP 1 637 401 B1**
(45) Veröffentlichungstag und Bekanntmachung des Hinweises auf die Patenterteilung: **20.08.2008**
(21) Anmeldenummer: 05107096.9
(22) Anmeldetag: 01.08.2005
(51) Int. Cl.: B60R 11/04

(54) **Bildaufnahmesystem**
Imaging system
Système de prise de vue

(30) Priorität: 15.09.2004 DE 102004044502
(43) Veröffentlichungstag der Anmeldung: 22.03.2006
(73) Patentinhaber: ROBERT BOSCH GMBH, 70442 Stuttgart (DE)
(72) Erfinder: Uffenkamp, Volker, 71638 Ludwigsburg (DE); Seger, Ulrich, 71229 Warmbronn (DE); Apel, Uwe, 72666 Neckartailfingen (DE); Schick, Jens, 71083 Herrenberg (DE); Schmack, Andreas, 71229 Leonberg (DE)

(56) Entgegenhaltungen:
- WO-A-01/70539
- DE-A1- 10 237 554
- US-A1- 2002 093 565
- US-B1- 6 170 955

## Beschreibung

### Stand der Technik

Die Erfindung betrifft ein Bildaufnahmesystem nach dem Oberbegriff des Anspruchs 1. Ein Bildaufnahmesystem der gattungsgemäßen Art wird vorzugsweise in Kraftfahrzeugen eingesetzt, um Bilder des Fahrzeugumfelds zu gewinnen und, in Verbindung mit Assistenzsystemen, dem Fahrer die Führung des Fahrzeugs zu erleichtern. Ein derartiges Bildaufnahmesystem umfasst wenigstens einen Bildsensor und ein diesem Bildsensor zugeordnetes optisches System, das ein Aufnahmefeld des Fahrzeugumfelds auf den Bildsensor abbildet. Um eine optimale Abbildungsqualität zu gewährleisten, müssen der Bildsensor und das optische System genauestens aufeinander justiert sein. Die Richtung der optischen Achse des Bildaufnahmesystems wird auch als Blickrichtung des Bildaufnahmesystems bezeichnet. Für fest montierte Bildaufnahmesysteme, wie sie z.B. in einem industriellen Umfeld bei messenden Systemen für die Produktionsüberwachung zu finden sind, oder auch für videounterstützte Fahrerassistenzsysteme, kommt der Blickrichtung es Bildaufnahmesystems in der Regel eine besondere Bedeutung zu, da sie eine definierte Ausrichtung aufweisen muss. So soll die Blickrichtung des Bildaufnahmesystems in Bezug auf das Fahrzeug, insbesondere in Bezug auf dessen Längsachse, in Bezug auf die Fahrbahnebene und in Bezug auf die Fahrtrichtung des Fahrzeugs eine definierte Lage aufweisen. Aufgrund von Fertigungstoleranzen bei der Fertigung des Bildaufnahmesystems und von Toleranzen bei der Montage des Bildaufnahmesystems in dem Fahrzeug kann häufig nicht ohne weiteres garantiert werden, dass die konstruktiv geplante Blickrichtung mit der tatsächlichen Blickrichtung übereinstimmt. Häufig muss daher eine optische und/oder mechanische Nachjustierung durchgeführt werden. Bei außerhalb von vorgebbaren Grenzwerten liegenden und daher auch durch eine Nachjustierung nicht mehr korrigierbaren Abweichungen muss das fehlerhafte Bildaufnahmesystem sogar ausgemustert und durch ein besser justierbares ersetzt werden. Beide Maßnahmen sind aufwendig und teuer.

Aus DE 102 38 935 A1 sind ein Verfahren und eine Vorrichtung zur Befestigung und Ausrichtung eines Sensors, insbesondere bei Kraftfahrzeugen bekannt. Hierbei wird der Sensor über ein Halteelement mit einer Unterlage verbunden. Durch Nachbearbeitung der Sensorauflage wird eine präzise Ausrichtung der Sensorachse in die Soll-Richtung erreicht.

Aus WO 03/053743 A1 ist eine Stereo-Kamera-Anordnung in einem Kraftfahrzeug bekannt, die insbesondere der Klassifizierung von Objekten und der Abstandsbestimmung dient. Um eine sichere Aufnahme und genaue Positionierung des Kamera-Systems, insbesondere eine Fixierung seiner seitlichen Position zu gewährleisten, wird eine Kamera-Anordnung vorgeschlagen mit mindestens zwei Kameramodulen, einer Halterung , in der Kamera-Module mit einem vorgegebenen seitlichen Abstand zueinander aufgenommen sind, wobei die Halterung an einer Innenseite einer Windschutzscheibe festgeklebt ist.

Aus der faltungsgemäβen deutschen Offenlegungsschrift DE 102 37 554 A1 ist eine justierbare Kameraanordnung für Kraftfahrzeuge bekannt, wobei ein Kameragehäuse über ein Kugelgelenk mit einer Halterung verbunden ist. Das Dokument US 6,170,955 B1 offenbart eine optische Anordnung zu Montage in einem Kraftfahrzeug, wobei die Kamera über eine Halterung an der Windschutzscheibe befestigt ist.

### Vorteile der Erfindung

Die vorliegende Erfindung schlägt ein Bildaufnahmesystem gemäß Anspruch 1 vor, bei dem einerseits schon während der Herstellung des Bildaufnahmesystems eine definierte mechanische Lagerung des Gehäuses des Bildaufnahmesystems sichergestellt ist. Weiterhin ist eine definierte Einbaulage des Bildaufnahmesystems in einem Fahrzeug garantiert. Die Justage der Blickrichtung des Bildaufnahmesystems in einem Fahrzeug ist von großer Bedeutung für die Fahrzeuginsdustrie, da Bildaufnahmesystemen eine immer bedeutendere Rolle im Zusammenhang mit Fahrersassistenzsystemen zuwächst. Fahrerassistenzsysteme ermöglichen die Darstellung und/oder Analyse des Fahrzeugumfelds in Echtzeit und können so den Fahrer bei der Führung des Fahrzeugs entlasten. Sowohl die Fertigung des Bildaufnahmesystems als auch die Fertigung des Fahrzeugs unterliegen komplexen Prozessen, die fehlerbehaftet sein können und Toleranzwerte einschließen. Die Toleranzwerte können dabei zu derart starken Abweichungen von den konstruktiv geplanten Werten führen, dass eine nicht mehr zu akzeptierende Abweichung der Blickrichtung des Bildaufnahmesystems von der Sollrichtung auftritt. Aus prozesstechnischen Gründen könnte nun eine Optimierung dahingehend wünschenswert sein, dass unter Einbeziehung aller Toleranzwerte und Korrekturmaßnahmen die Abweichungen von den Sollwerten in dem Einbauzustand des Bildaufnahmesystems minimal sind. Bei Überschreiten der Justagegrenzen kann dann aber nicht mehr zweifelsfrei geklärt werden, in wessen Verantwortungsbereich die irreparable Toleranzabweichung aufgetreten ist. Dies kann zu ungeklärten Haftungsfragen und unerfreulichen Auseinandersetzungen in der Zuliefererkette führen. Die vorliegende Erfindung schlägt daher eine eindeutige Abgrenzung von Justageschritten im Rahmen der Fertigung eines Bildaufnahmesystems und im Rahmen seiner Endmontage im Fahrzeug vor. Auf diese Weise können Verantwortlichkeiten eindeutig zugeordnet und missliebige Auseinandersetzungen über die Zuständigkeit vermieden werden.
Die Erfindung macht sich die Erkenntnis zunutze, dass durch eine präzise Lagerung des Gehäuses des Bildaufnahmesystems alle weiteren Fertigungsschritte, wie insbesondere die Montage und Ausrichtung von Sensor und Optikmodul mit geringstmöglichen Toleranzwerten durchführbar sind. Für die Endmontage in einem Fahrzeug kann somit ein weitgehend fehlerfreies Bildaufnahmesystem bereitgestellt werden.
Besonders vorteilhaft wird das Gehäuse des Bildaufnahmesystems mit einer 3-Punkt-Auflage ausgestattet, mit deren Hilfe es wohldefiniert in einer Gehäuseaufnahme lagerbar ist. Besonders vorteilhaft besteht diese 3-Punkt-Auflage aus gehärteten und geschliffenen Spitzen. Diese Spitzen greifen in halbkugelförmig ausgebildete Ausnehmungen in der Gehäuseaufnahme ein.

Weitere Vorteile ergeben sich aus der nachfolgenden Beschreibung von Ausführungsbeispielen mit Bezug auf die Figuren und aus den abhängigen Patentansprüchen.

### Zeichnung

Die Erfindung wird nachstehend anhand der in der Zeichnung dargestellten Ausführungsformen näher erläutert.

### Es zeigen:

- Figur 1: ein Bildaufnahmesystem während einer Fertigungsphase in einer Schnittdarstellung,
- Figur 2: ein in einem Fahrzeug montiertes Bildaufnahmesystem in einer Schnittdarstellung.

### Beschreibung der Ausführungsbeispiele

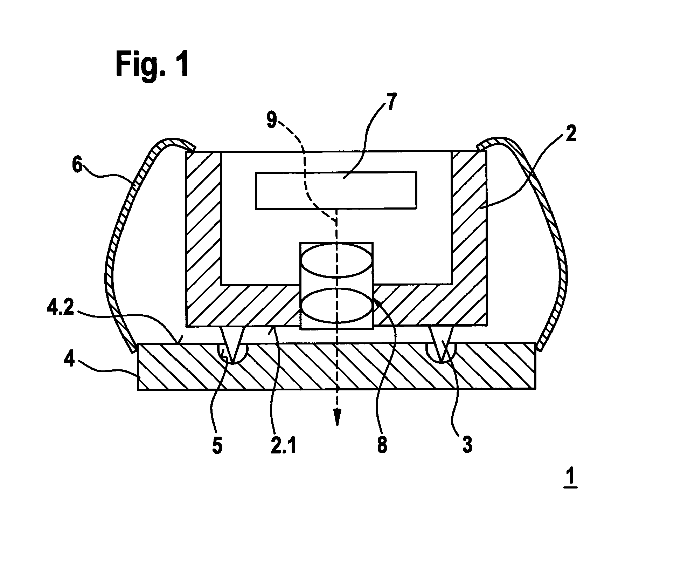

Figur 1 zeigt ein Bildaufnahmesystem 1 während einer Fertigungsphase in einer Schnittdarstellung. Das Bildaufnahmesystem 1 umfasst ein Gehäuse 2 für die Aufnahme eines optischen Systems 8 und eines Bildsensors 7. Aus dem Boden des Gehäuses 2 ragen drei Spitzen 3 hervor, die eine 3-Punkt-Auflage für das Gehäuse 2 bilden. Vorzugsweise sind die Spitzen 3 gehärtet und geschliffen. Für die Dauer der Fertigung ist dem Gehäuse 2 eine Gehäuseaufnahme 4 zugeordnet. In einer Oberfläche der Gehäuseaufnahme 4 sind drei mit den Spitzen 3 des Gehäuses 2 korrespondierende Ausnehmungen 5 angeordnet. Vorzugsweise haben diese Ausnehmungen 5 die Gestalt von Halbkugeln. Bei dem Einsetzen der Spitzen 3 in die Ausnehmungen 5 ergibt sich durch eine Selbstzentrierung eine definierte Lage des Gehäuses 2 in Bezug auf die Gehäuseaufnahme 4. Um das Gehäuse 2 während der Fertigung in dieser defmierten Lage zu halten sind Verbindungsmittel vorgesehen, die das Gehäuse 2 und die Gehäuseaufnahme 4 verbinden. Als Verbindungsmittel sind Federbügel 6 vorgesehen. Diese Federbügel 6 sind zweckmäßig an einem Ende an der Gehäuseaufnahme 4 angelenkt und liegen mit ihrem freien Ende auf dem Gehäuse 2 auf und pressen dieses so an die Gehäuseaufnahme 4 an. Zweckmäßig wird die ordnungsgemäße Lage des Gehäuses 2 in Bezug auf die Gehäuseaufnahme noch durch eine Kontrollmessung überprüft, um Fehlerquellen, beispielsweise durch Abnutzung der Spitzen 3 und/oder Verschmutzung der Ausnehmungen 5 auszuschließen. Eine derartige Kontrollmessung wird zweckmäßig mit einem Strahlungssender, insbesondere Laser, durchgeführt, dessen Strahlung auf eine ausgewählte Fläche des Gehäuses 2 gerichtet und dort reflektiert wird. Die von dem Gehäuse 2 reflektierte Strahlung wird von einem Sensor erfasst. Bei einem nicht richtig justierten Gehäuse wird keine reflektierte Strahlung erfasst und ein Fehlersignal erzeugt. Für die weiteren Montageschritte zur Montage des optischem Systems 8 und des Bildsensors 7 ist daher von einer präzise definierten Lage des Gehäuses 2 auszugehen. Der Bildsensor 7 und das optische System 8 werden nun derart in dem Gehäuse 2 montiert und befestigt, dass die optische Achse oder Blickrichtung des Bildaufnahmesystems 1 senkrecht in Bezug auf den Boden des Gehäuses 2 und die Gehäuseaufnahme 4 ausgerichtet ist. In einer Endabnahmeprüfung wird zweckmäßig geprüft, ob alle mechanischen und optischen Daten des Bildaufnahmesystems innerhalb der vorgegebenen Toleranzen liegen. Das fertige Bildaufnahmesystem 1 wird dann an den Fahrzeughersteller ausgeliefert.

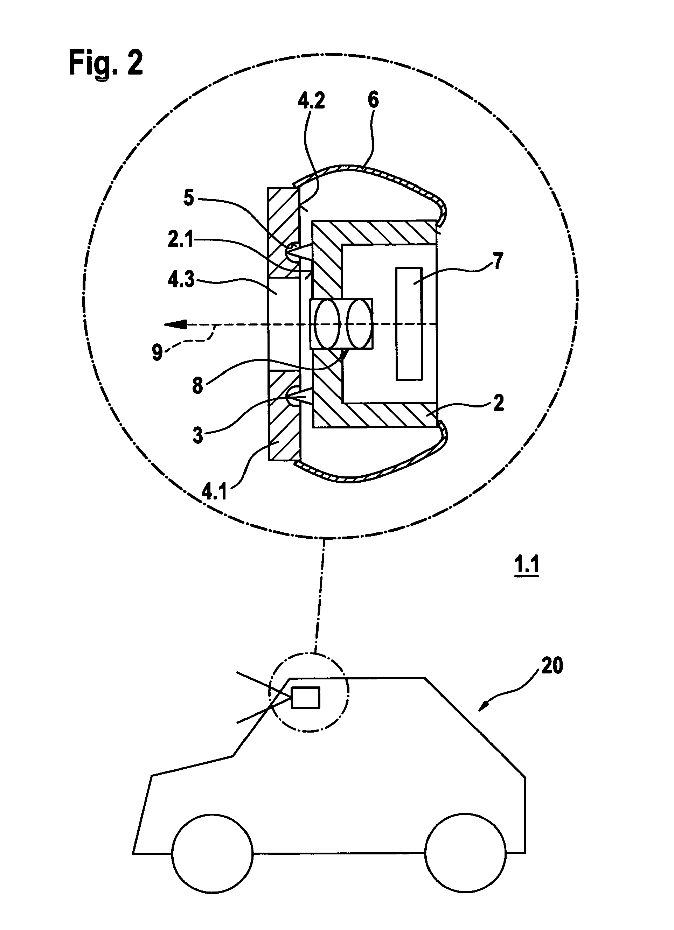

Figur 2 verdeutlicht die Einbausituation des Bildaufnahmesystems 1.1 in einem Fahrzeug 20. In dem Kreis ist eine vergrößerte Schnittdarstellung des Bildaufnahmesystems 1.1 in Einbaulage dargestellt. Fahrzeugseitig ist eine Gehäuseaufnahme 4.1 für die Halterung des Gehäuses 2 des Bildaufnahmesystems 1.1 vorgesehen. Die dem Gehäuse 2 zugewandte Oberfläche 4.2 der Gehäuseaufnahme 4.1 umfasst wiederum Ausnehmungen 5 für die Aufnahme der mit dem Gehäuse 2 verbundenen Spitzen 3 und entspricht damit im Wesentlichen der für die Fertigung des Bildaufnahmesystems 1 benutzten Gehäuseaufnahme 4. Um dem Bildsensor 7 einen freien Blick auf das Fahrzeugumfeld zu ermöglichen, weist jedoch die Gehäuseaufnahme 4.1 in ihrem zentralen Bereich eine Bohrung 4.3 auf. Nach Einführen der Spitzen 3 des Gehäuses 2 in die Ausnehmungen 5 der Gehäuseaufnahme 4.1 und Auflegen der Federbügel auf das Gehäuse 2 nimmt das Gehäuse 2 eine wohl definierte Lage in Bezug auf die fahrzeugfest angeordnete Gehäuseaufnahme 4.1 an. Da diese Gehäuseaufnahme 4.1 fahrzeugseitig in Bezug auf die Längsachse des Fahrzeugs 20 justiert ist, nimmt auch die optische Achse 9 oder Blickrichtung des Bildaufnahmesystems eine definierte Lage in Bezug auf die Längsachse des Fahrzeugs 20 ein. Durch eine vereinbarte und eindeutig definierte Schnittstelle, nämlich die Auflage des Gehäuses 2 auf der Gehäuseaufnahme 4, bzw. 4.1, ist eine eindeutige Zuordnung der Verantwortlichkeiten für die Qualität des Bildaufnahmesystems 1, 1.1 sichergestellt. Fahrzeugseitig ist für eine präzise Montage und Justage der Gehäuseaufnahme 4.1 zu sorgen, während der Hersteller des Bildaufnahmesystems für die Qualität des Gehäuses 2 und der darin angeordneten Komponenten, wie insbesondere Bildsensor 7 und optisches System 8 die Verantwortung trägt. Die Federbügel 6 ermöglichen eine leichte Austauschbarkeit des Gehäuses für Wartungszwecke oder dergleichen.

Für den Fall, dass das Gehäuse 2 nicht rotationssymmetrisch in Bezug auf die optische Achse 9 des Bildaufnahmesystems 1 ist, kann durch entsprechende Anordnung der Spitzen 3 dennoch eine vordefinierte Lagerung des Gehäuses 2 zur Montage gewährleistet werden.

## Patentansprüche

1. Bildaufnahmesystem umfassend ein Gehäuse (2), einen in dem Gehäuse (2) angeordneten Bildsensor (7), sowie ein in dem Gehäuse (2) angeordnetes optisches System (8), sowie eine Gehäuseaufnahme (4,4.1), an der das Gehäuse (2) befestigt ist, **dadurch gekennzeichnet, dass** das Bildaufnahmesystem (1,1.1) Federbügel (6) als Verbindungsmittel für die Verbindung des Gehäuses (2) mit der Gehäuseaufnahme (4,4.1) umfasst, wobei die Federbügel (6) mit einem Ende an der Gehäuseaufnahme (4,4.1) angelenkt sind und mit ihrem freien Ende auf dem Gehäuse (2) aufliegen.

2. Bildaufnahmesystem nach Anspruch 1, **dadurch gekennzeichnet, dass** wenigstens eine Grundfläche (2.1) des Gehäuses (2) eine 3-Punkt-Auflage umfasst, die mit einer Auflagefläche der Gehäuseaufnahme (4,4.1) zusammenwirkt.

3. Bildaufnahmesystem nach Anspruch 2, **dadurch gekennzeichnet, dass** die 3-Punkt-Auflage drei Spitzen (3) umfasst, die aus der Grundfläche (2.1) des Gehäuses (2) hervorragen.

4. Bildaufnahmesystem nach Anspruch 3 **dadurch gekennzeichnet, dass** in der dem Gehäuse (2) zugewandten Oberfläche (4.2) der Gehäuseaufnahme (4,4.1) Ausnehmungen (5) für die Aufnahme der Spitzen (3) angeordnet sind.

5. Bildaufnahmesystem nach Anspruch 4, **dadurch gekennzeichnet, dass** die Ausnehmungen (5) als Halbkugel ausgestaltet sind.

6. Bildaufnahmesystem nach einem der vorhergehenden Ansprüche, **dadurch gekennzeichnet, dass** die Gehäuseaufnahme (4.1) in ihrem zentralen Bereich eine Bohrung (4.3) aufweist.

## Claims

1. Imaging system, comprising a housing (2), an image sensor (7) which is arranged in the housing (2) and an optical system (8) which is arranged in the housing (2) and a housing receptacle (4, 4.1) to which the housing (2) is attached, **characterized in that** the imaging system (1, 1.1) comprises spring straps (6) as connecting means for connecting the housing (2) to the housing receptacle (4, 4.1), wherein the spring straps (6) are coupled by one end to the housing receptacle (4, 4.1) and rest with their free end on the housing (2).

2. Imaging system according to Claim 1, **characterized in that** at least one base surface (2.1) of the housing (2) comprises a three-point support which interacts with a supporting surface of the housing receptacle (4, 4.1).

3. Imaging system according to Claim 2, **characterized in that** the three-point support comprises three tips (3) which project from the base surface (2.1) of the housing (2).

4. Imaging system according to Claim 3, **characterized in that** recesses (5) for holding the tips (3) are arranged in the surface (4.2) of the housing receptacle (4, 4.1) which faces the housing (2).

5. Imaging system according to Claim 4, **characterized in that** the recesses (5) are configured as hemispheres.

6. Imaging system according to one of the preceding claims, **characterized in that** the housing receptacle (4.1) has a bore (4.3) in its central region.

## Revendications

1. Système de prise de vue comprenant un boîtier (2), un capteur d'image (7) installé dans le boîtier (2) ainsi qu'un système optique (8) installé dans le boîtier (2) et un support de boîtier (4, 4.1) auquel est fixé le boîtier (2),
**caractérisé en ce que**
le système de prise de vue (1, 1.1) comporte des pinces élastiques (6) comme moyens de liaison pour relier le boîtier (2) au logement de boîtier (4, 4.1), ces pinces élastiques (6) étant articulées par une extrémité au logement du boîtier (4, 4.1) et elles s'appuient par leur extrémité libre contre le boîtier (2).

2. Système de prise de vue selon la revendication 1,
**caractérisé en ce qu'**
au moins une surface de base (2.1) du boîtier (2) comprend un appui en trois points coopérant avec la surface d'appui du logement de boîtier (4, 4.1).

3. Système de prise de vue selon la revendication 2,
**caractérisé en ce que**
l'appui en trois points comprend trois pointes (3) qui dépassent de la surface de base (2.1) du boîtier (2).

4. Système de prise de vue selon la revendication 3,
**caractérisé en ce que**
la surface supérieure (4.2) du logement de boîtier (4, 4.1) tournée vers le boîtier (2) comporte des cavités (5) pour recevoir les pointes (3).

5. Système de prise de vue selon la revendication 4,
**caractérisé en ce que**
les cavités (5) sont réalisées sous la forme de demi-sphères.

6. Système de prise de vue selon l'une des revendications précédentes,
**caractérisé en ce que**
le logement de boîtier (4.1) comporte dans son perçage (4.3) une zone centrale.
